(19) Europäisches Patentamt / European Patent Office / Office européen des brevets

(11) **EP 3 855 176 B1**

(12) **EUROPEAN PATENT SPECIFICATION**

(45) Date of publication and mention
of the grant of the patent:
**05.03.2025 Bulletin 2025/10**

(21) Application number: **21151980.6**

(22) Date of filing: **18.01.2021**

(51) International Patent Classification (IPC):
***G01N 21/956*** *(2006.01)*

(52) Cooperative Patent Classification (CPC):
**G01N 21/95684; G01N 21/8806;** G01N 2021/8845;
G01N 2021/8854; G01N 2021/8887

(54) **WORKPIECE INSPECTION METHOD AND APARATUS AND NON-TRANSITORY COMPUTER-READABLE MEDIUM**

VERFAHREN UND GERÄT ZUR WERKSTÜCKINSPEKTION UND NICHT-TRANSITORISCHES COMPUTERLESBARES MEDIUM

APPAREIL ET PROCÉDÉ D'INSPECTION D'UNE PIÈCE ET SUPPORT LISIBLE PAR ORDINATEUR NON TRANSITOIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.01.2020 CN 202010076946**

(43) Date of publication of application:
**28.07.2021 Bulletin 2021/30**

(73) Proprietor: **Ricoh Company, Ltd.**
**Tokyo 143-8555 (JP)**

(72) Inventors:
• **WANG, Zhicheng**
**Haidian District, Beijing 100044 (CN)**
• **ZHANG, Yifei**
**Haidian District, Beijing 100044 (CN)**

(74) Representative: **Marks & Clerk LLP**
**15 Fetter Lane**
**London EC4A 1BW (GB)**

(56) References cited:
**US-A- 5 751 910     US-A- 6 023 663**

• **CAPSON D W ET AL: "A tiered-color illumination approach for machine inspection of solder joints", IEEE TRANSACTIONS ON PATTERN ANALYSIS AND MACHINE INTELLIGENCE, IEEE COMPUTER SOCIETY, USA, vol. 10, no. 3, 1 May 1988 (1988-05-01), pages 387 - 393, XP002243987, ISSN: 0162-8828, DOI: 10.1109/ 34.3902**
• **FUPEI WU ET AL: "An AOI algorithm for PCB based on feature extraction", INTELLIGENT CONTROL AND AUTOMATION, 2008. WCICA 2008. 7TH WORLD CONGRESS ON, IEEE, PISCATAWAY, NJ, USA, 25 June 2008 (2008-06-25), pages 240 - 247, XP031300897, ISBN: 978-1-4244-2113-8**
• **SONG JI-DEOK ET AL: "SMT defect classification by feature extraction region optimization and machine learning", THE INTERNATIONAL JOURNAL OF ADVANCED MANUFACTURING TECHNOLOGY, SPRINGER, LONDON, vol. 101, no. 5, 17 November 2018 (2018-11-17), pages 1303 - 1313, XP036747650, ISSN: 0268-3768, [retrieved on 20181117], DOI: 10.1007/ S00170-018-3022-6**

**Description**

BACKGROUND OF THE INVENTION

1. Field of the Invention

The present disclosure relates to the technical field of image processing, more particularly relates to a workpiece inspection method and apparatus as well as the relevant computer program and non-transitory computer-readable medium.

2. Description of the Related Art

In the related art, after using ordinary visible light as a light source to capture the image of a workpiece to be inspected, by adopting threshold based image segmentation, it is difficult to segment solder joints/pads made of the same material in the captured image. Thus, the quality of the workpiece cannot be evaluated.

A laser system may be utilized to detect the height of each of the solder joints/pads of the workpiece and evaluate the quality of the workpiece. However, the laser system is very expensive and slow to detect.

Capson D W et al: "A tiered-color illumination approach for machine inspection of solder joints", IEEE TRANSACTIONS ON PATTERN ANALYSIS AND MACHINE INTELLIGENCE, IEEE COMPUTER SOCIETY, USA, vol. 10, no. 3, 1 May 1988 (1988-05-01), pages 387-393, XP002243987, ISSN: 0162-8828, DOI:10.1109/34.3902, discloses an experimental color visual inspection system for the detection of solder joint flaws on printed circuit boards.

Fupei Wu et al: "An AOI algorithm for PCB based on feature extraction", INTELLIGENT CONTROL AND AUTOMATION, 2008. WCICA 2008. 7TH WORLD CONGRESS ON, IEEE, PISCATAWAY, NJ, USA, 25 June 2008 (2008-06-25), pages 240-247, XP031300897, ISBN: 978-1-4244-2113-8, discloses an automated optical inspection (AOI) algorithm based on the image acquired from a 3-CCD color camera and a 3-color hemispherical LED arrays light resource (red, green, and blue).

United States Patent No. 5751910A discloses a solder paste brick inspection and physical quality scoring system employing a neural network trained with a fuzzified output vector.

SUMMARY OF THE INVENTION

The present disclosure is proposed in light of the above-described problem in the conventional techniques. The objective of the present disclosure is to provide a workpiece inspection method and apparatus as defined in the appended claims.

BRIEF DESCRIPTION OF THE DRAWINGS

FIG. 1 is a flowchart of a workpiece inspection method according to a first embodiment of the present disclosure;
FIG. 2 illustrates image capture performed on a workpiece to be inspected in a second embodiment of the present disclosure;
FIG. 3 illustrates a part of FIG. 2;
FIGS. 4A to 4C are the top views of ring-shaped sub-light sources in the second embodiment of the present disclosure, respectively;
FIG 5 illustrates an exemplary image of the workpiece to be inspected, captured in the second embodiment of the present disclosure;
FIG. 6 is a block diagram of a workpiece inspection apparatus according to a third embodiment of the present disclosure;
FIG. 7 illustrates another structure of the workpiece inspection apparatus according to the third embodiment of the present disclosure;
FIG. 8 is a block diagram of an obtainment part in the workpiece inspection apparatus according to the third embodiment of the present disclosure; and
FIG. 9 is a block diagram of another workpiece inspection apparatus according to a fourth embodiment of the present disclosure.

DETAILED DESCRIPTION OF THE PREFERRED EMBODIMENTS

In order to let a person skilled in the art better understand the present disclosure, hereinafter, the embodiments of the present disclosure will be concretely described with reference to the drawings. However, it should be noted that the same symbols, which are in the specification and the drawings, stand for the constructional elements having basically the same function and structure, and the repeated explanations for the constructional elements are omitted.

In the embodiments of the present disclosure, a workpiece inspection method and apparatus as well as the relevant computer program and non-transitory computer-readable medium are provided by which it is possible to improve image quality.

<First Embodiment>

This embodiment provides a workpiece inspection method.

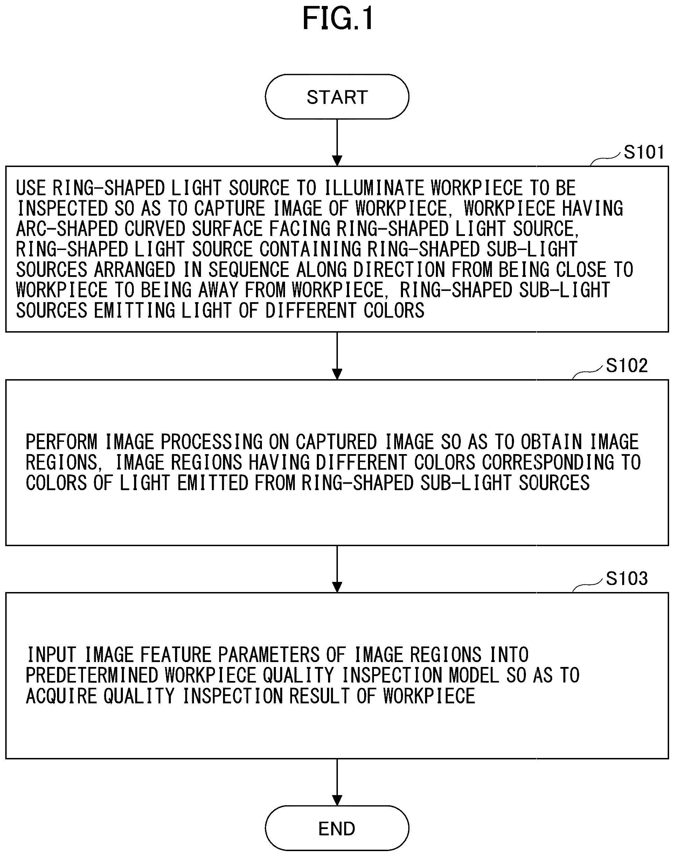

FIG. 1 is a flowchart of the workpiece inspection method. As presented in FIG. 1, the workpiece inspection method is inclusive of STEPS S101 to S103.

In STEP S101, a ring-shaped light source is utilized to illuminate a workpiece to be inspected so as to capture the image of the workpiece. The workpiece has an arc-shaped curved surface that faces to the ring-shaped light source. In a direction from being close to the workpiece to being away from the workpiece, the ring-shaped light source includes a plurality of ring-shaped sub-light sources arranged in sequence. Different ring-shaped sub-light sources may emit light of different colors.

Because the workpiece to be inspected has an arc-shaped curved surface that faces the ring-shaped light source, and since the ring-shaped light source includes a plurality of ring-shaped sub-light sources emitting light of different colors, arranged in sequence, when the ring-shaped light source emits light to illuminate the arc-shaped curved surface, the light reflected from different regions of the arc-shaped curved surface may propagate in different directions. Hence, a plurality of regions of different colors with obvious boundaries may appear on the arc-shaped curved surface. In particular, the workpiece to be inspected may be a spherical workpiece, an ellipsoidal workpiece, etc. Of course, the workpiece is not limited to these kinds of workpieces. That is, the workpiece may also have other shapes as long as it has an arc-shaped surface.

The ring-shaped light source may be inclusive of three, four, or more ring-shaped sub-light sources emitting light of different colors. Each of the ring-shaped sub-light sources may include a plurality of point light sources which are arranged in a ring. The axes of the rings preferably coincide with the axis of the arc-shaped curved surface. In order to match the shape of the ring-shaped light source with the shape of the arc-shaped curved surface so that the arc-shaped curved surface may better reflect the light of the ring-shaped light source, the radii of the rings formed by the ring-shaped sub-light sources gradually increase in a direction being away from the workpiece to being close to the workpiece. In a specific example, the ring-shaped light source may include a first ring-shaped sub-light source that emits red light, a second ring-shaped sub-light source that emits green light, and a third ring-shaped sub-light source that emits blue light. The first ring-shaped sub-light source, the second ring-shaped sub-light source, and the third ring-shaped sub-light source may be arranged in sequence along a direction being away from the workpiece to being close to the workpiece.

STEP S102 is carrying out image processing with respect to the captured image so as to acquire a plurality of image regions. The plurality of image regions has different colors, and the colors of the plurality of image regions correspond to the colors of the light emitted from the plurality of ring-shaped sub-light sources.

The ring-shaped light source is adopted as a visible light source, and a camera is utilized to capture the image of the workpiece to be inspected. Because the arc-shaped curved surface of the workpiece faces the ring-shaped light source, and since the light reflected by different regions of the arc-shaped curved surface propagates in different directions, a plurality of regions of different colors with clear boundaries may appear on the arc-shaped curved surface. Thus, after performing image capture on the workpiece, by conducting image processing in regard to the captured image, it is possible to obtain a plurality of image regions of different colors. For example, in a case where the ring-shaped light source is inclusive of the first ring-shaped sub-light source, the second ring-shaped sub-light source, and the third ring-shaped sub-light source arranged in sequence along a direction from being away from the workpiece to being close to the workpiece, the captured image of the workpiece may show a red region, a green region, and a blue region with obvious boundaries.

By dividing the captured image of the workpiece, it is possible to acquire a plurality of image regions of different colors. The colors of the plurality of image regions correspond to the colors of the light emitted from the ring-shaped sub-light sources.

In general, the material and color of the connection portion of the workpiece to be inspected are the same as the material and color of the other portion of the workpiece. If a single color light source is used to capture the image of the workpiece, then the boundary of the connection portion of the workpiece in the captured image is not clear, thereby making image segmentation difficult. In this embodiment, multiple color light sources are employed to obtain the image of the workpiece, so that different regions of the workpiece may present different colors. This is beneficial to image segmentation so as to acquire the boundary of the connection portion of the workpiece.

In STEP S103, the image feature parameters of the plurality of image regions are input into a predetermined workpiece quality inspection model so as to acquire the quality inspection result of the workpiece.

The image feature parameters of the plurality of the image regions may include but are not limited to the distance D between the actual center of gravity and the theoretical center of gravity of the workpiece, determined based on the plurality of image regions; the area A occupied by the workpiece in the captured image, determined based on the plurality of image regions; the distance d between the centers of gravity of any two image regions among the plurality of the image regions; the ratio Ra of the areas of any two image regions among the plurality of image regions; the roundness Ro of each of the plurality of image regions; and the filling degree P of each of the binary images of the plurality of image regions.

The roundness Ro of an image region may be calculated by adopting the following equation.

$$Ro = 4\pi A / L^2$$

Here, A stands for the area of the image region, and L refers to the perimeter of the image region.

When calculating the filling degree P of the binary image of an image region, first it is necessary to convert the image region into the binary image. The binary image may be attained by letting the pixels in the image region whose grayscale values are greater than or equal to a predetermined threshold be white and the pixels in the image region whose grayscale values are less than the predetermined threshold be black. The predetermined threshold may be set according to actual needs. Next, it is possible to calculate the filling degree P of the binary image of the image region by using the following formula.

$$P = A_{void}/A$$

Here, $A_{void}$ denotes the total area of the black pixels in the binary image, and A is the total area of the binary image (which may be presented by pixels). The above-described image feature parameters may reflect the quality of the workpiece to be inspected. For example, whether the approximate shape of the workpiece meets the related design standard may be determined based on the distance D between the actual center of gravity and the theoretical center of gravity of the workpiece, the area A occupied by the workpiece in the captured image, etc. In the same way, the other image feature parameters may reflect the perfection of the quality of the workpiece.

Before conducting the quality evaluation of the workpiece, it is necessary to perform training so as to obtain a workpiece quality inspection model (i.e., the predetermined workpiece quality inspection model). When training the workpiece quality inspection model, first an initial workpiece quality inspection model needs to be established. The initial workpiece quality inspection model contains weight parameters corresponding to the image feature parameters. The number of the weight parameters is equal to the number of the image feature parameters. Second training data including the quality inspection results of sample workpieces and the image feature parameters of a plurality of image regions of each of the sample workpieces are acquired. The plurality of image regions of each of the sample workpieces is attained by processing the image captured using the ring-shaped light source to illuminate the same sample workpiece. Finally, the training data is utilized to train the initial workpiece quality inspection model so as to obtain the predetermined workpiece quality inspection model. The input of the predetermined workpiece quality inspection model is the image feature parameters of a plurality of image regions of a workpiece to be inspected, and the output of the predetermined workpiece quality inspection model is the quality inspection result of the workpiece.

After obtaining the predetermined workpiece quality inspection model, by inputting the image feature parameters of the plurality of image regions acquired in STEP S102, it is possible to attain the quality inspection result of the workpiece to be inspected.

In this embodiment, a ring-shaped light source is utilized to illuminate a workpiece to be inspected so as to capture the image of the workpiece. The workpiece has an arc-shaped curved surface facing the ring-shaped light source. Along a direction from being close to the workpiece to being away from the workpiece, the ring-shaped light source is inclusive of a plurality of ring-shaped sub-light sources arranged in sequence. The colors of the light emitted from the different ring-shaped sub-light sources are different. Because the arc-shaped curved surface of the workpiece faces the ring-shaped light source, different regions of the workpiece may reflect the light of different colors. Hence, after carrying out image capture with respect to the workpiece, by conducting image processing on the captured image, it is possible to acquire a plurality of image regions of different colors. Subsequently, by inputting the image feature parameters of the plurality of image regions into a predetermined workpiece quality inspection model, it is possible to obtain the quality inspection result of the workpiece to be inspected. In the technical solution of the present disclosure, by letting visible light serve as a light source, it is possible to use image capture to carry out quality evaluation with respect to a workpiece to be inspected, having an arc-shaped curved surface, thereby being capable of reducing the related cost and ameliorating the efficiency of inspection.

<Second Embodiment>

This embodiment is on the basis of the first embodiment.

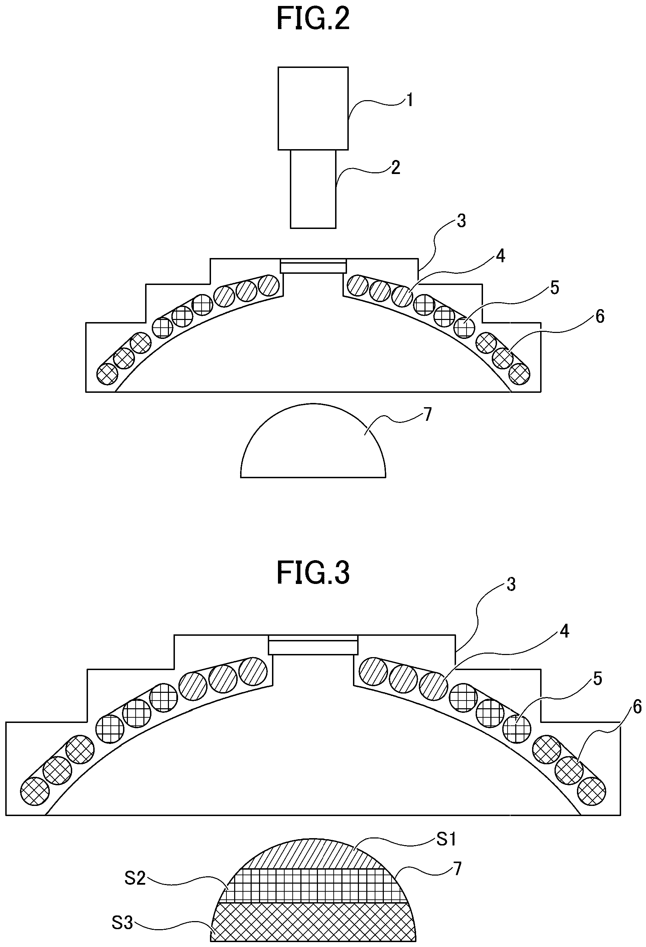

FIG. 2 illustrates image capture performed on a workpiece to be inspected in this embodiment. FIG. 3 illustrates a part of FIG. 2.

In this embodiment, as presented in FIGS. 2 and 3, a ring-shaped light source 3 contains three ring-shaped sub-light sources of different colors, namely, a first ring-shaped sub-light source 4 emitting red light, a second ring-shaped sub-light source 5 emitting green light, and a third ring-shaped sub-light source 6 emitting blue light.

Furthermore, a workpiece 7 has an arc-shaped curved surface. When conducting image capture on the workpiece 7, the arc-shaped curved surface of the workpiece 7 faces the ring-shaped light source 3, and a camera 1 and its lens 2 are located on the side of the ring-shaped light source 3 away from the workpiece 7.

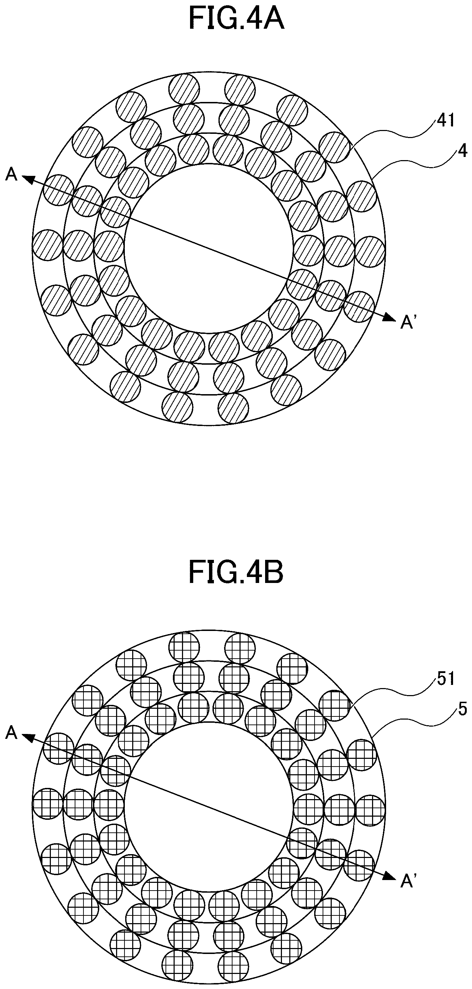

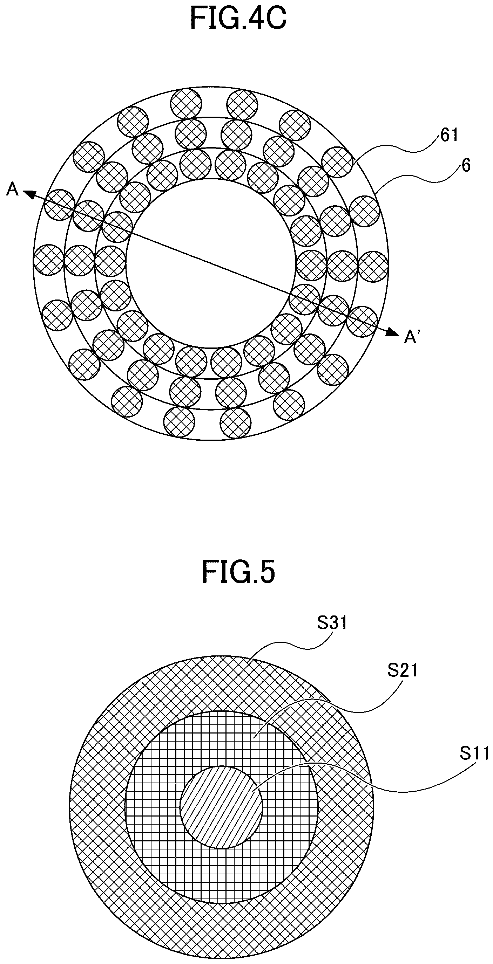

FIG. 4A is the top view of the first ring-shaped sub-light source 4. It is apparent from FIG. 4A that the first ring-shaped sub-light source 4 includes a plurality of red LEDs (Light Emitting Diodes) 41 arranged in arrays, and the plurality of red LEDs 41 are arranged in a ring. The first ring-shaped sub-light source 4 shown in FIGS. 2 and 3 are on the cross-sectional view of FIG. 4A in the AA' direction therein. FIG. 4B is the top view of the second ring-shaped sub-light source 5. As presented in FIG. 4B, the second ring-shaped sub-light source 5 contains a plurality of green LEDs 51 arranged in arrays, and the plurality of green LEDs 51 are arranged in a ring. The second ring-shaped sub-light source 5 shown in FIGS. 2 and 3 are on the cross-sectional view of FIG. 4B in the AA' direction thereof. FIG. 4C is the top view of the third ring-shaped sub-light source 6. It is clear from FIG. 4C that the third ring-shaped sub-light source 6 is inclusive of a plurality of blue LEDs arranged in arrays, and the plurality of blue LEDs are arranged in a ring. The third ring-shaped sub-light source 6 presented in FIGS. 2 and 3 are on the cross-sectional view of FIG. 4C in the AA' direction therein. Along a direction from being close to the workpiece 7 to being away from the workpiece 7, the radii of the rings, in which the LEDs are arranged, are gradually decrease, so that it is possible to match the shape of the ring-shaped light source 3 with the arc-shaped surface of the workpiece 7.

When performing image capture on the workpiece 7, the axis of the camera 1 and its lens 2 coincides with the axis of the ring-shaped light source 3 and the axis of the arc-shaped curved surface of the workpiece 7. In the image of the workpiece 7 captured in this way, the workpiece 7 may be located in the center. This is helpful to improve the precision and accuracy of the quality evaluation of the workpiece 7. When the light of the ring-shaped light source 3 illuminates the arc-shaped curves surface of the workpiece 7, as presented in FIG. 3, the arc-shaped curved surface may be divided into a region S1 reflecting the red light, a region S2 reflecting the green light, and a region S3 reflecting the blue light.

FIG 5 illustrates the captured image of the workpiece 7. As shown in FIG. 5, the captured image of the workpiece 7 contains a red region S11, a green region S21, and a blue region S31. When performing image processing on the captured image of the workpiece 7, the captured image of the workpiece 7 may be divided into three channel images of red, green, and blue. Then, by using a linear or non-linear function $I=f(I_R, I_G, I_B)$ to combine the three channel images, it is possible to acquire three image regions $I_1$, $I_2$, and $I_3$.

Particularly, the following equations may be adopted to obtain the three image regions $I_1$, $I_2$, and $I_3$.

$$I_1 = f_1(I_R, I_G, I_B)$$

$$I_2 = f_2(I_R, I_G, I_B)$$

$$I_3 = f_3(I_R, I_G, I_B)$$

Here, $I_1$ is a first image region, $I_2$ is a second image region, $I_3$ is a third image region, $I_R$ is a red channel image, $I_G$ is a green channel image, $I_B$ is a blue channel image, and each of $f_1$, $f_2$, and $f_3$ stands for a linear or non-linear function.

Alternatively, it is possible to obtain the three image regions $I_1$, $I_2$, and $I_3$ by using the following formulas.

$$I_1 = I_R$$

$$I_2 = \max(I_R, I_B) - I_R$$

$$I_3 = I_R + I_G + I_B$$

After the three image regions $I_1$, $I_2$, and $I_3$ are obtained, image feature parameter extraction may be carried out on the basis of the three image regions $I_1$, $I_2$, and $I_3$.

The image feature parameter extraction may extract the following image feature parameters, namely,

(1) the distance D between the actual center of gravity and the theoretical center of gravity of the workpiece 7, determined based on the three image regions (here, the unit of the distance D may be in pixels);

(2) the area A occupied by the workpiece 7 in the captured image, determined based on the three image regions (here, the unit of the area A may also be in pixels);

(3) the distance d between the centers of gravity of any two image regions among the three image regions (here, the distances d may be expressed by $d_{12} = \|C_1 - C_2\|$, $d_{13} = \|C_1 - C_3\|$, and $d_{23} = \|C_2 - C_{31}\|$; $C_1$, $C_2$ and $C_3$ are the centers of gravity of the first, second, and third image region, respectively);

(4) the ratio Ra of the areas of any two image regions among the three image regions (here, the ratios Ra may be expressed by $Ra_1 = Area_1:Area_2$, $Ra_2 = Area_1:Area_3$, and $Ra_3 = Area_2:Area_3$; $Area_1$, $Area_2$, and $Area_3$ are the areas of the first, second, and third image region, respectively);

(5) the roundness Ro of each of the three image regions (here, the roundness Ro may be expressed by $Ro = 4\pi A/L^2$; A and L are the area and perimeter of the same image region, respectively); and

(6) the purity P of each of the three image regions, which may represent the filling degree of the binary image of the same image region, and may also reflect the uniformity of the workpiece 7 (here, the purity P may be expressed by $P = A_{void}/A$; $A_{void}$ is the area of the void region (i.e., the black pixels) in the binary image of the same image region, and A is the total area of the same image region).

Moreover, it is possible to obtain a workpiece quality inspection model (i.e., the predetermined workpiece quality inspection model) by adopting machine learning based approaches, and then, use the image feature parameters extracted and the workpiece quality inspection model obtained to carry out quality evaluation in regard to the workpiece 7. Here, the machine learning based approaches may include but are not limited to a SVM (Support Vector Machine) approach and a random forest approach.

When obtaining the workpiece quality inspection model, first it is necessary to establish an initial workpiece quality inspection model. The initial workpiece quality inspection model contains weight parameters corresponding to the image feature parameters extracted, for example, a weight parameter W1 corresponding to D, a weight parameter W2 corresponding to A, a weight parameter W3 corresponding to d, a weight parameter W4 corresponding to Ra, a weight parameter W5 corresponding to Ro, and a weight parameter W6 corresponding to P. Here it should be noted that regarding the meaning of each of D, A, d, Ra, Ro, and P, it is possible to see the above description.

Second training data is obtained. The training data includes the quality inspection results of sample workpieces and the image feature parameters of a plurality of (e.g., three) image regions of each of the sample workpieces. The plurality of image regions of each of the sample workpieces may be acquired by performing image processing on the image which may be captured by utilizing the ring-shaped light source to illuminate the same sample workpiece. The quality inspection results of the sample workpieces may include but are not limited to "Perfect", "Very Good", "Good", "Acceptable", and "Defective", for example.

Eventually, a training process is conducted with respect to the initial workpiece quality inspection model by using the training data so as to let the outputs of the initial workpiece quality inspection model approach the quality inspection results of the sample workpieces, thereby being able to acquire the predetermined workpiece quality inspection model.

After the predetermined workpiece quality inspection model is obtained, by inputting the extracted image feature parameters (1) to (6) of the three image regions into the predetermined workpiece quality inspection model, it is possible to acquire the quality inspection result of the workpiece 7. The quality inspection result of the workpiece 7 may include but is not limited to "Perfect", "Very Good", "Good", "Acceptable", and "Defective", for example.

Here it should be noted that the image feature parameters of the three image regions needing to be input into the predetermined workpiece quality inspection model may include all the extracted image feature parameters (1) to (6) or a part of them, for example, D, A, d and Ra; D, A, d, Ra, and Ro; D, A, d, Ra, Ro, and P; or D, A, d, Ra, and P (also, for the meaning of each of D, A, d, Ra, Ro, and P, it is possible to see the above description).

<Third Embodiment>

In this embodiment, a workpiece inspection apparatus is provided in which the workpiece inspection method according to the first or second embodiment can be implemented.

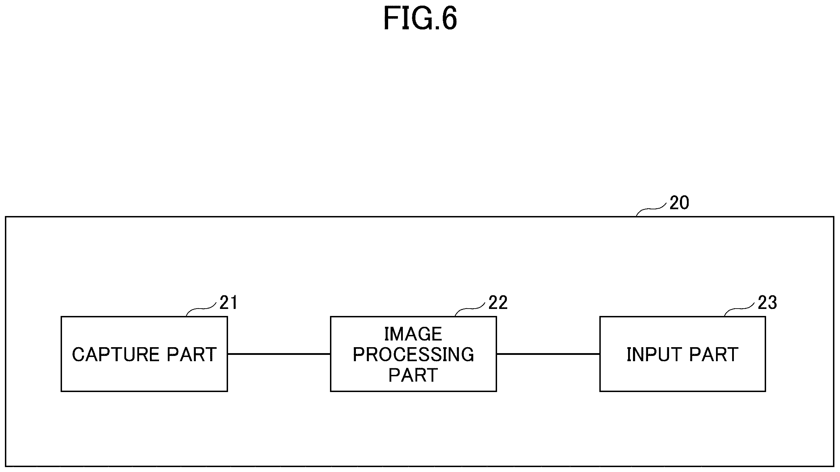

FIG. 6 is a block diagram of a workpiece inspection apparatus 20 according to this embodiment. As shown in FIG. 6, the workpiece inspection apparatus 20 includes a capture part 21, an image processing part 22, an input part 23.

The capture part 21 is configured to utilize a ring-shaped light source to illuminate a workpiece to be inspected so as to capture the image of the workpiece. The workpiece has an arc-shaped curved surface that faces the ring-shaped light source. In a direction from being close to the workpiece to being away from the workpiece, the ring-shaped light source is inclusive of a plurality of ring-shaped sub-light sources arranged in sequence. Different ring-shaped sub-light sources may emit light of different colors.

Because the workpiece has an arc-shaped curved surface that faces the ring-shaped light source, and since the ring-shaped light source includes a plurality of ring-shaped sub-light sources emitting light of different colors arranged in sequence, when the ring-shaped light source emits light to illuminate the arc-shaped curved surface, the light reflected by different regions of the arc-shaped curved surface may propagate in different directions. Hence, a plurality of regions of different colors with obvious boundaries may appear on the arc-shaped curved surface. Particularly, the workpiece may be a spherical workpiece, an ellipsoidal workpiece, etc. Of course, the workpiece is not limited to these types of workpieces. That is, the workpiece may also have other shapes as long as it has an arc-shaped surface.

The ring-shaped light source may be inclusive of three, four, or more ring-shaped sub-light sources emitting light of different colors. Each of the ring-shaped sub-light sources may include a plurality of point light sources which are arranged in a ring. The axes of the rings preferably coincide with the axis of the arc-shaped curved surface. In order to match the shape of the ring-shaped light source with the shape of the arc-shaped curved surface so that the arc-shaped curved surface may better reflect the light of the ring-shaped light source, the radii of the rings formed by the ring-shaped sub-light sources gradually increase along a direction being away from the workpiece to being close to the workpiece. In a specific example, the ring-shaped light source may include a first ring-shaped sub-light source that emits red light, a second ring-shaped sub-light source that emits green light, and a third ring-shaped sub-light source that emits blue light. The first ring-shaped sub-light source, the second ring-shaped sub-light source, and the third ring-shaped sub-light source may be arranged in sequence along a direction being away from the workpiece to being close to the workpiece.

The image processing part 22 is configured to carrying out image processing with respect to the captured image so as to acquire a plurality of image regions. The plurality of image regions has different colors, and the colors of the plurality of image regions correspond to the colors of the light emitted from the plurality of ring-shaped sub-light sources.

The ring-shaped light source is adopted as a visible light source, and a camera is utilized to capture the image of the workpiece to be inspected. Because the arc-shaped curved surface of the workpiece faces the ring-shaped light source, and since the light reflected by different regions of the arc-shaped curved surface propagates in different directions, a plurality of regions of different colors with clear boundaries may appear on the arc-shaped curved surface. Thus, after performing image capture on the workpiece, by processing the captured image, it is possible to obtain a plurality of image regions of different colors. For example, in a case where the ring-shaped light source is inclusive of the first ring-shaped sub-light source, the second ring-shaped sub-light source, and the third ring-shaped sub-light source arranged in sequence along a direction from being away from the workpiece to being close to the workpiece, the captured image of the workpiece may present a red region, a green region, and a blue region with obvious boundaries.

By dividing the captured image of the workpiece, it is possible to acquire a plurality of image regions of different colors. The colors of the plurality of image regions correspond to the colors of the light emitted from the ring-shaped sub-light sources.

The input part 23 is configured to input the image feature parameters of the plurality of image regions into a predetermined workpiece quality inspection model so as to acquire the quality inspection result of the workpiece.

The image feature parameters of the plurality of the image regions may include but are not limited to the distance D between the actual center of gravity and the theoretical center of gravity of the workpiece, determined based on the plurality of image regions; the area A occupied by the workpiece in the captured image, determined based on the plurality of image regions; the distance d between the centers of gravity of any two image regions among the plurality of the image regions; the ratio Ra of the areas of any two image regions among the plurality of image regions; the roundness Ro of each of the plurality of image regions; and the filling degree P of each of the binary images of the plurality of image regions.

Before conducting the quality evaluation of the workpiece, it is necessary to perform training so as to obtain a workpiece quality inspection model (i.e., the predetermined workpiece quality inspection model). When obtaining the predetermined workpiece quality inspection model, first an initial workpiece quality inspection model needs to be built. The initial workpiece quality inspection model contains weight parameters corresponding to the image feature parameters of the plurality of image regions. The number of the weight parameters is equal to the number of the image feature parameters. Second training data including the quality inspection results of sample workpieces and the image feature parameters of a plurality of image regions of each of the sample workpieces are acquired. The plurality of image regions of each of the sample workpieces may be attained by processing the image captured using the ring-shaped light source to illuminate the same sample workpiece. Finally, the training data is utilized to train the initial workpiece quality inspection model so as to obtain the predetermined workpiece quality inspection model. The input of the predetermined workpiece quality inspection model is the image feature parameters of a plurality of image regions of a workpiece to be inspected, and the output of the predetermined workpiece quality inspection model is the quality inspection result of the workpiece.

After the predetermined workpiece quality inspection model is obtained, by inputting the image feature parameters obtained by the image processing part 22 into the predetermined workpiece quality inspection model, it is possible to attain the quality inspection result of the workpiece to be inspected.

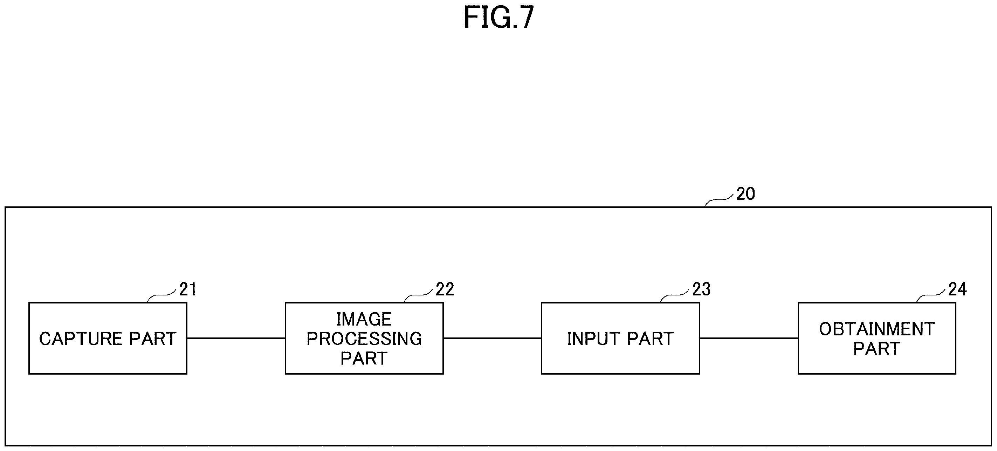

For this reason, the workpiece inspection apparatus 20 may further include an obtainment part 24 as presented in FIG. 7 that illustrates another structure of the workpiece inspection apparatus 20.

The obtainment part 24 is configured to obtain the predetermined workpiece quality inspection model.

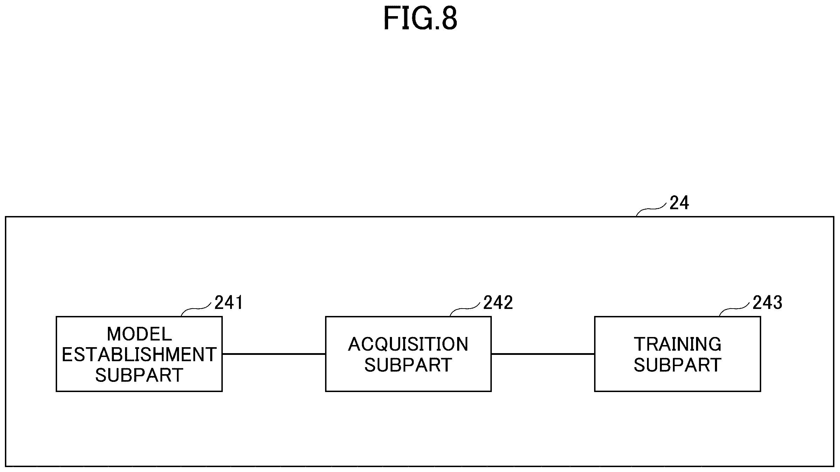

FIG. 8 is a block diagram of the obtainment part 24 shown in FIG. 7. As presented in FIG.8, the obtainment part 24 is inclusive of a model establishment subpart 241, an acquisition subpart 242, and a training subpart 243.

The model establishment subpart 241 is configured to establish an initial workpiece quality inspection model. The initial workpiece quality inspection model contains weight parameters corresponding to the image feature parameters of the plurality of image regions.

The acquisition subpart 242 is configured to acquire training data. The training data includes the quality inspection results of sample workpieces and the image feature parameters of a plurality of image regions of each of the sample workpieces. The plurality of image regions of each of the sample workpieces is attained by processing the image captured using the ring-shaped light source to illuminate the same sample workpiece.

The training subpart 243 is configured to train the initial workpiece quality inspection model by utilizing the training data so as to obtain the predetermined workpiece quality inspection model.

In this embodiment, a ring-shaped light source is used for illuminating a workpiece to be inspected so as to capture the image of the workpiece. The workpiece has an arc-shaped curved surface facing the ring-shaped light source. Along a direction from being close to the workpiece to being away from the workpiece, the ring-shaped light source is inclusive of a plurality of ring-shaped sub-light sources arranged in sequence. The colors of the light emitted by the different ring-shaped sub-light sources are different. Because the arc-shaped curved surface of the workpiece faces the ring-shaped light source, different regions of the workpiece may reflect the light of different colors. Hence, after carrying out image capture with respect to the workpiece, by conducting image processing with respect to the captured image, it is possible to acquire a plurality of image regions of different colors. Subsequently, by inputting the image feature parameters of the plurality of image regions into a predetermined workpiece quality inspection model, it is possible to obtain the quality inspection result of the workpiece to be inspected. In the technical solution of the present disclosure, by letting visible light serve as a light source, it is possible to use image capture to carry out quality evaluation in regard to a workpiece to be inspected, having an arc-shaped curved surface, thereby being capable of reducing the related cost and improving the efficiency of inspection.

<Fourth Embodiment>

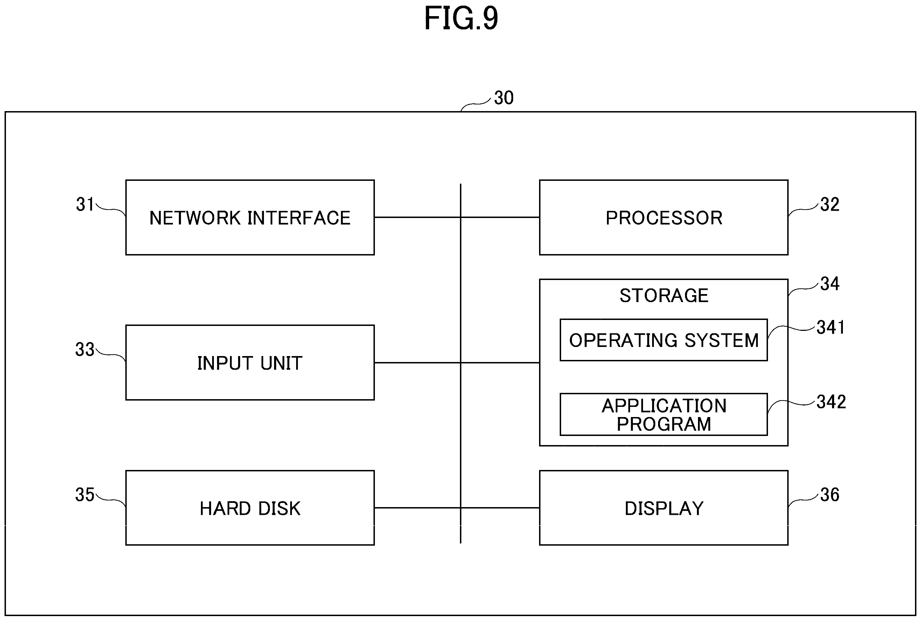

Another workpiece inspection apparatus is provided in this embodiment. FIG. 9 is a block diagram of a workpiece inspection apparatus 30 according to this embodiment. As presented in FIG. 9, the workpiece inspection apparatus 30 may contain a network interface 31, a processor 32, an input unit 33, a storage 34 including an operating system 341 and an application program 342, a hard disk 35, and a display 36 which are connected by a bus.

The network interface 31 may be used to connect to a network such as the Internet, a local area network (LAN), or the like.

The processor 32 may be configured to execute a computer program, for example, the application program 342 stored in the storage 34 so as to achieve the workpiece inspection method in accordance with the first or second embodiment.

The input unit 33 may be utilized to let a user input various instructions, which may be a keyboard or a touch panel, for example.

The storage 34 may be used to store requisite programs and data as well as the intermediate results generated when the processor 32 executes the application program 342 in the storage 34.

The hard disk 35 may be employed to store any information or data necessary to fulfill the workpiece inspection method in accordance with the first or second embodiment.

The display 36 may be configured to display the results acquired when executing the application program 342 in the storage 34 by the processor 32, for example.

<Fifth Embodiment>

In this embodiment, a computer program and a non-transitory computer-readable medium are briefly described as follows.

The computer program may cause a computer to conduct the workpiece inspection method in accordance with the first or second embodiment.

Furthermore, the non-transitory computer-readable medium may store computer-executable instructions (i.e., a computer program) for execution by a computer including a processor(s) or processing system. The computer-executable instructions, when executed by the processor(s) or processing system, may render the processor(s) or processing system to perform the workpiece inspection method according to the first or second embodiment.

In addition, it should be noted that the above embodiments are just exemplary ones, and the specific structure and operation of them may not be used for limiting the present disclosure.

Moreover, the embodiments of the present disclosure may be implemented in any convenient form, for example, using dedicated hardware or a mixture of dedicated hardware and software. The embodiments of the present disclosure may be implemented as computer software implemented by one or more networked processing apparatuses. The network may comprise any conventional terrestrial or wireless communications network, such as the Internet. The processing apparatuses may comprise any suitably programmed apparatuses such as a general-purpose computer, a personal digital assistant, a mobile telephone (such as a WAP or 3G, 4G, or 5G-compliant phone) and so on. Since the embodiments of the present disclosure can be implemented as software, each and every aspect of the present disclosure thus encompasses computer software implementable on a programmable device.

The computer software may be provided to the programmable device using any storage medium for storing processor-readable code such as a floppy disk, a hard disk, a CD ROM, a magnetic tape device or a solid state memory device.

The hardware platform includes any desired hardware resources including, for example, a central processing unit (CPU), a random access memory (RAM), and a hard disk drive (HDD). The CPU may include processors of any desired type and number. The RAM may include any desired volatile or nonvolatile memory. The HDD may include any desired nonvolatile memory capable of storing a large amount of data. The hardware resources may further include an input device, an output device, and a network device in accordance with the type of the apparatus. The HDD may be provided external to the apparatus as long as the HDD is accessible from the apparatus. In this case, the CPU, for example, the cache memory of the CPU, and the RAM may operate as a physical memory or a primary memory of the apparatus, while the HDD may operate as a secondary memory of the apparatus.

While the present disclosure is described with reference to the specific embodiments chosen for purpose of illustration, it should be apparent that the present disclosure is not limited to these embodiments, but numerous modifications could be made thereto by those people skilled in the art without departing from the basic concept and technical scope of the present disclosure as defined in the appended claims.

**Claims**

1. A workpiece inspection method comprising:

    a capture step of using a ring-shaped light source (3) to illuminate a workpiece (7) to be inspected so as to capture an image of the workpiece (7), wherein, the workpiece (7) has an arc-shaped curved surface, the arc-shaped curved surface faces the ring-shaped light source (3), the ring-shaped light source (3) is inclusive of a plurality of ring-shaped sub-light sources (4, 5, 6) arranged in sequence along a direction from being close to the workpiece (7) to being away from the workpiece (7), and the plurality of ring-shaped sub-light sources (4, 5, 6) emits light of different colors;
    an image processing step of performing image processing on the captured image so as to obtain a plurality of image regions ($I_1$, $I_2$, $I_3$), wherein, the plurality of image regions ($I_1$, $I_2$, $I_3$) has different colors, and the colors of the plurality of image regions ($I_1$, $I_2$, $I_3$) correspond to the colors of the light emitted from the plurality of ring-shaped sub-light sources (4, 5, 6); and
    an input step of obtaining image feature parameters of the plurality of image regions ($I_1$, $I_2$, $I_3$) and inputting the image feature parameters of the plurality of image regions ($I_1$, $I_2$, $I_3$) into a predetermined workpiece quality inspection model so as to acquire a quality inspection result of the workpiece (7),
    wherein each of the ring-shaped sub-light sources (4, 5, 6) comprises a plurality of light-emitting diodes arranged in a plurality of ring-shaped arrays, wherein a radius of each of the ring-shaped arrays increases along the direction from being away from the workpiece to being close to the workpiece,
    and wherein the ring-shaped light source (3) includes:

        a first ring-shaped sub-light source (4) emitting red light;
        a second ring-shaped sub-light source (5) emitting green light; and
        a third ring-shaped sub-light source (6) emitting blue light,

    and wherein the image feature parameters of the plurality of the image regions ($I_1$, $I_2$, $I_3$) include:

        a distance (D) between an actual center of gravity and a theoretical center of gravity of the workpiece (7), determined based on the plurality of image regions ($I_1$, $I_2$, $I_3$);
an area (A) occupied by the workpiece (7) in the captured image, determined based on the plurality of image regions ($I_1$, $I_2$, $I_3$);
a distance (d) between centers of gravity of any two image regions ($I_1$, $I_2$, $I_3$) among the plurality of the image regions ($I_1$, $I_2$, $I_3$); and
a ratio of areas (Ra) of any two image regions ($I_1$, $I_2$, $I_3$) among the plurality of image regions ($I_1$, $I_2$, $I_3$).

2. The workpiece inspection method according to claim 1, wherein, the image processing step includes

    dividing the captured image into three channel images of red, green, and blue; and
    combining the three channel images by utilizing a linear or non-linear function so as to attain three image regions ($I_1$, $I_2$, $I_3$).

3. The workpiece inspection method according to claim 2, wherein, the three image regions ($I_1$, $I_2$, $I_3$) are obtained by using equations $I1 = I_1 = f_1 (I_R, I_G, I_B)$, $I1 = I_2 = f_2(I_R, I_G, I_B)$, and $I1 = I_3 = f_3(I_R, I_G, I_B)$ to combine the three channel images; here, $I_1$ is a first image region, $I_2$ is a second image region, $I_3$ is a third image region, $I_R$ is a red channel image, $I_G$ is a green channel image, $I_B$ is a blue channel image, and each of $f_1$, $f_2$, and $f_3$ stands for a linear or non-linear function.

4. The workpiece inspection method according to any preceding claim, wherein, the image feature parameters of the plurality of the image regions ($I_1$, $I_2$, $I_3$) further include at least one of

    a roundness (Ro) of each of the plurality of image regions ($I_1$, $I_2$, $I_3$); and
    a filling degree (P) of each of binary images of the plurality of image regions ($I_1$, $I_2$, $I_3$).

5. The workpiece inspection method according to any one of claims 1 to 4, further comprising:

    an obtainment step of obtaining the predetermined workpiece quality inspection model, wherein,
    the obtainment step includes
    establishing an initial workpiece quality inspection model containing weight parameters corresponding to the image feature parameters;
    acquiring training data containing quality inspection results of sample workpieces (7) and image feature parameters of a plurality of image regions ($I_1$, $I_2$, $I_3$) of each of the sample workpieces (7), wherein, the plurality of image re-

gions ($I_1$, $I_2$, $I_3$) of each of the sample workpieces (7) is attained by performing image processing on an image captured using the ring-shaped light source (3) to illuminate the same sample workpiece (7); and

utilizing the training data to train the initial workpiece quality inspection model so as to obtain the predetermined workpiece quality inspection model.

6. A workpiece inspection apparatus (20) comprising:

a capture part (21) configured to use a ring-shaped light source to illuminate a workpiece to be inspected so as to capture an image of the workpiece, wherein, the workpiece has an arc-shaped curved surface, the arc-shaped curved surface faces the ring-shaped light source, the ring-shaped light source is inclusive of a plurality of ring-shaped sub-light sources arranged in sequence along a direction from being close to the workpiece to being away from the workpiece, and the plurality of ring-shaped sub-light sources emits light of different colors;

an image processing part (22) configured to perform image processing on the captured image so as to obtain a plurality of image regions ($I_1$, $I_2$, $I_3$), wherein, the plurality of image regions ($I_1$, $I_2$, $I_3$) has different colors, and the colors of the plurality of image regions ($I_1$, $I_2$, $I_3$) correspond to the colors of the light emitted from the plurality of ring-shaped sub-light sources; and

an input part (23) configured to obtain image feature parameters of the plurality of image regions ($I_1$, $I_2$, $I_3$) and input the image feature parameters of the plurality of image regions ($I_1$, $I_2$, $I_3$) into a predetermined workpiece quality inspection model so as to acquire a quality inspection result of the workpiece,

wherein each of the ring-shaped sub-light sources (4, 5, 6) comprises a plurality of light-emitting diodes arranged in a plurality of ring-shaped arrays, wherein a radius of each of the ring-shaped arrays increases along the direction from being away from the workpiece to being close to the workpiece, and wherein the ring-shaped light source (3) includes

a first ring-shaped sub-light source (4) emitting red light;
a second ring-shaped sub-light source (5) emitting green light; and
a third ring-shaped sub-light source (6) emitting blue light
and wherein the image feature parameters of the plurality of the image regions ($I_1$, $I_2$, $I_3$) include:

a distance (D) between an actual center of gravity and a theoretical center of gravity of the workpiece (7), determined based on the plurality of image regions ($I_1$, $I_2$, $I_3$);
an area (A) occupied by the workpiece (7) in the captured image, determined based on the plurality of image regions ($I_1$, $I_2$, $I_3$);
a distance (d) between centers of gravity of any two image regions ($I_1$, $I_2$, $I_3$) among the plurality of the image regions ($I_1$, $I_2$, $I_3$); and
a ratio of areas (Ra) of any two image regions ($I_1$, $I_2$, $I_3$) among the plurality of image regions ($I_1$, $I_2$, $I_3$).

7. The workpiece inspection apparatus according to claim 6, further comprising:

an obtainment part (24) configured to obtain the predetermined workpiece quality inspection model,
wherein,
the obtainment part (24) includes
a model establishment subpart (241) configured to establish an initial workpiece quality inspection model containing weight parameters corresponding to the image feature parameters;
an acquisition subpart (242) configured to acquire training data containing quality inspection results of sample workpieces and image feature parameters of a plurality of image regions ($I_1$, $I_2$, $I_3$) of each of the sample workpieces, wherein, the plurality of image regions ($I_1$, $I_2$, $I_3$) of each of the sample workpieces is attained by performing image processing on an image captured using the ring-shaped light source to illuminate the same sample workpiece; and
a training subpart (243) configured to utilize the training data to train the initial workpiece quality inspection model so as to obtain the predetermined workpiece quality inspection model.

**Patentansprüche**

1. Verfahren zur Werkstückinspektion, Folgendes umfassend:

einen Aufnahmeschritt des Verwendens einer ringförmigen Lichtquelle (3), um ein zu inspizierendes Werkstück (7) dergestalt zu beleuchten, dass ein Bild des Werkstücks (7) aufgenommen wird, wobei das Werkstück (7) eine bogenförmig gekrümmte Oberfläche aufweist, die bogenförmig gekrümmte Oberfläche der ringförmigen Lichtquelle (3) zugewandt ist, die ringförmige Lichtquelle (3) eine Vielzahl ringförmiger Teillichtquellen (4, 5, 6) einschließt, die in einer Sequenz entlang einer Richtung von nahe an dem Werkstück (7) bis entfernt von dem Werkstück (7) angeordnet ist, und die Vielzahl ringförmiger Teillichtquellen (4, 5, 6) Licht unterschiedlicher Farben emittiert;

einen Bildverarbeitungsschritt des Durchführens einer Bildverarbeitung an dem aufgenommenen Bild dergestalt, dass eine Vielzahl von Bildbereichen ($I_1$, $I_2$, $I_3$) erzielt wird, wobei die Vielzahl von Bildbereichen ($I_1$, $I_2$, $I_3$) unterschiedliche Farben aufweist und die Farben der Vielzahl von Bildbereichen ($I_1$, $I_2$, $I_3$) den Farben des von der Vielzahl von ringförmigen Teillichtquellen (4, 5, 6) emittierten Lichts entsprechen; und

einen Eingabeschritt des Erzielens von Bildmerkmalparametern der Vielzahl von Bildbereichen ($I_1$, $I_2$, $I_3$) und des Eingebens der Bildmerkmalparameter der Vielzahl von Bildbereichen ($I_1$, $I_2$, $I_3$) in ein vorbestimmtes Werkstückqualitäts-Inspektionsmodell dergestalt, dass ein Qualitätsinspektionsergebnis des Werkstücks (7) erfasst wird,

wobei jede der ringförmigen Teillichtquellen (4, 5, 6) eine Vielzahl von Leuchtdioden umfasst, die in einer Vielzahl von ringförmigen Anordnungen angeordnet ist, wobei ein Radius jeder der ringförmigen Anordnungen entlang der Richtung von entfernt vom Werkstück zu nahe an dem Werkstück zunimmt,

und wobei die ringförmige Lichtquelle (3) Folgendes einschließt:

eine erste ringförmige Teillichtquelle (4), die rotes Licht emittiert;
eine zweite ringförmige Teillichtquelle (5), die grünes Licht emittiert; und
eine dritte ringförmige Teillichtquelle (6), die blaues Licht emittiert,
und wobei die Bildmerkmalparameter der Vielzahl der Bildbereiche ($I_1$, $I_2$, $I_3$) Folgendes einschließen:

eine Entfernung (D) zwischen einem tatsächlichen Schwerpunkt und einem theoretischen Schwerpunkt des Werkstücks (7), bestimmt auf der Grundlage der Vielzahl von Bildbereichen ($I_1$, $I_2$, $I_3$);
eine Fläche (A), die durch das Werkstück (7) in dem aufgenommenen Bild eingenommen wird, bestimmt auf der Grundlage der Vielzahl von Bildbereichen ($I_1$, $I_2$, $I_3$);
eine Entfernung (d) zwischen Schwerpunkten von zwei beliebigen Bildbereichen ($I_1$, $I_2$, $I_3$) aus der Vielzahl der Bildbereiche ($I_1$, $I_2$, $I_3$); und
ein Flächenverhältnis (Ra) von zwei beliebigen Bildbereichen ($I_1$, $I_2$, $I_3$) aus der Vielzahl von Bildbereichen ($I_1$, $I_2$, $I_3$).

2. Verfahren zur Werkstückinspektion nach Anspruch 1, wobei der Bildverarbeitungsschritt Folgendes einschließt:

Unterteilen des aufgenommenen Bildes in drei Kanalbilder von Rot, Grün und Blau; und Kombinieren der drei Kanalbilder unter Verwendung einer linearen oder nichtlinearen Funktion dergestalt, dass drei Bildbereiche ($I_1$, $I_2$, $I_3$) erlangt werden.

3. Verfahren zur Werkstückinspektion nach Anspruch 2, wobei die drei Bildbereiche ($I_1$, $I_2$, $I_3$) erzielt werden, indem die Gleichungen $I1 = I_1 = f_1 (I_R, I_G, I_B)$, $I1 = I_2 = f_2 (I_R, I_G, I_B)$ und $I1 = I_3 = f_3 (I_R, I_G, I_B)$ zum Kombinieren der drei Kanalbilder verwendet werden; hierbei ist $I_1$ ein erster Bildbereich, $I_2$ ist ein zweiter Bildbereich, $I_3$ ist ein dritter Bildbereich, $I_R$ ist ein Bild des roten Kanals, $I_G$ ist ein Bild des grünen Kanals, $I_B$ ist ein Bild des blauen Kanals, und jedes von $f_1$, $f_2$ und $f_3$ steht für eine lineare oder nichtlineare Funktion.

4. Verfahren zur Werkstückinspektion nach einem der vorhergehenden Ansprüche, wobei die Bildmerkmalparameter der Vielzahl der Bildbereiche ($I_1$, $I_2$, $I_3$) ferner mindestens eines der Folgenden einschließen:

eine Rundheit (Ro) jedes der Vielzahl von Bildbereichen ($I_1$, $I_2$, $I_3$); und
einen Füllgrad (P) jedes von Binärbildern der Vielzahl von Bildbereichen ($I_1$, $I_2$, $I_3$).

5. Verfahren zur Werkstückinspektion nach einem der Ansprüche 1 bis 4, ferner Folgendes umfassend:

einen Erzielschritt des Erzielens des vorbestimmten Werkstückqualitäts-Inspektionsmodells,
wobei
der Erzielschritt Folgendes einschließt:

Erstellen eines anfänglichen Werkstückqualitäts-Inspektionsmodells, das Gewichtsparameter enthält, die den Bildmerkmalparametern entsprechen;
Erfassen von Trainingsdaten, die Qualitätsinspektionsergebnisse von Probewerkstücken (7) und Bildmerkmalparameter einer Vielzahl von Bildbereichen ($I_1$, $I_2$, $I_3$) jedes der Probewerkstücke (7) enthalten, wobei die Vielzahl von Bildbereichen ($I_1$, $I_2$, $I_3$) jedes der Probewerkstücke (7) durch Durchführen einer Bildverarbeitung an einem Bild erlangt wird, das unter Verwendung der ringförmigen Lichtquelle (3) zur Beleuchtung desselben Probewerkstücks (7) aufgenommen wird; und Verwenden der Trainingsdaten, um das anfängliche Werkstückqualitäts-Inspektionsmodell dergestalt zu trainieren, dass das vorbestimmte Werkstückqualitäts-Inspektionsmodell erzielt wird.

6. Gerät zur Werkstückinspektion (20), Folgendes umfassend:

einen Aufnahmeteil (21), der konfiguriert ist, um eine ringförmige Lichtquelle zu verwenden, um ein zu inspizierendes Werkstück dergestalt zu beleuchten, dass ein Bild des Werkstücks aufgenommen wird, wobei das Werkstück eine bogenförmig gekrümmte Oberfläche aufweist, die bogenförmig gekrümmte Oberfläche der ringförmigen Lichtquelle zugewandt ist, die ringförmige Lichtquelle eine Vielzahl von ringförmigen Teillichtquellen einschließt, die in einer Sequenz entlang einer Richtung von nahe am Werkstück bis entfernt vom Werkstück angeordnet ist, und die Vielzahl von ringförmigen Teillichtquellen Licht unterschiedlicher Farben emittiert;
einen Bildverarbeitungsteil (22), der konfiguriert ist, um eine Bildverarbeitung an dem aufgenommenen Bild dergestalt durchzuführen, dass eine Vielzahl von Bildbereichen ($I_1$, $I_2$, $I_3$) erzielt wird, wobei die Vielzahl von Bildbereichen ($I_1$, $I_2$, $I_3$) unterschiedliche Farben aufweist und die Farben der Vielzahl von Bildbereichen ($I_1$, $I_2$, $I_3$) den Farben des von der Vielzahl von ringförmigen Teillichtquellen emittierten Lichts entsprechen; und
einen Eingabeteil (23), der konfiguriert ist, um Bildmerkmalparameter der Vielzahl von Bildbereichen ($I_1$, $I_2$, $I_3$) zu erzielen und die Bildmerkmalparameter der Vielzahl von Bildbereichen ($I_1$, $I_2$, $I_3$) in ein vorbestimmtes Werkstückqualitäts-Inspektionsmodell dergestalt einzugeben, dass ein Qualitätsinspektionsergebnis des Werkstücks erfasst wird,
wobei jede der ringförmigen Teillichtquellen (4, 5, 6,) eine Vielzahl von Leuchtdioden umfasst, die in einer Vielzahl von ringförmigen Anordnungen angeordnet ist, wobei ein Radius jeder der ringförmigen Anordnungen entlang der Richtung von entfernt vom Werkstück zu nahe an dem Werkstück zunimmt,
und wobei die ringförmige Lichtquelle (3) Folgendes einschließt:

eine erste ringförmige Teillichtquelle (4), die rotes Licht emittiert;

eine zweite ringförmige Teillichtquelle (5), die grünes Licht emittiert; und
eine dritte ringförmige Teillichtquelle (6), die blaues Licht emittiert,
und wobei die Bildmerkmalparameter der Vielzahl der Bildbereiche ($I_1$, $I_2$, $I_3$) Folgendes einschließen:

eine Entfernung (D) zwischen einem tatsächlichen Schwerpunkt und einem theoretischen Schwerpunkt des Werkstücks (7), bestimmt auf der Grundlage der Vielzahl von Bildbereichen ($I_1$, $I_2$, $I_3$);
eine Fläche (A), die durch das Werkstück (7) in dem aufgenommenen Bild eingenommen wird, bestimmt auf der Grundlage der Vielzahl von Bildbereichen (11, 12, I3);
eine Entfernung (d) zwischen Schwerpunkten von zwei beliebigen Bildbereichen ($I_1$, $I_2$, $I_3$) aus der Vielzahl der Bildbereiche ($I_1$, $I_2$, $I_3$); und
ein Flächenverhältnis (Ra) von zwei beliebigen Bildbereichen ($I_1$, $I_2$, $I_3$) aus der Vielzahl von Bildbereichen $I_1$, $I_2$, $I_3$).

7. Gerät zur Werkstückinspektion nach Anspruch 6, das ferner Folgendes umfasst:

einen Erzielungsteil (24), der zum Erzielen des vorbestimmten Werkstückqualitäts-Inspektionsmodells konfiguriert ist,
wobei
der Erzielungsteil (24) Folgendes einschließt:

ein Modellerstellungs-Teilstück (241), das konfiguriert ist, um ein anfängliches Werkstückqualitäts-Inspektionsmodell zu erstellen, das Gewichtsparameter enthält, die den Bildmerkmalparametern entsprechen;
ein Erfassungs-Teilstück (242), das konfiguriert ist, um Trainingsdaten zu erfassen, die Qualitätsinspektionsergebnisse von Probewerkstücken und Bildmerkmalparameter einer Vielzahl von Bildbereichen ($I_1$, $I_2$, $I_3$) jedes der Probewerkstücke enthalten, wobei die Vielzahl von Bildbereichen ($I_1$, $I_2$, $I_3$) jedes der Probewerkstücke durch Durchführen einer Bildverarbeitung an einem Bild erlangt wird, das unter Verwendung der ringförmigen Lichtquelle zum Beleuchten desselben Probewerkstücks erfasst wird; und
ein Trainings-Teilstück (243), das konfiguriert ist, um die Trainingsdaten zum Trainieren des anfänglichen Werkstückqualitäts-Inspektionsmodells dergestalt zu verwenden, dass das vorbestimmte Werkstückqualitäts-Inspektionsmodell erzielt wird.

**Revendications**

1. Procédé d'inspection d'une pièce comprenant :

une étape de capture consistant à utiliser une source lumineuse de forme annulaire (3) pour éclairer une pièce (7) à inspecter de façon à capturer une image de la pièce (7), dans lequel la pièce (7) présente une surface incurvée en forme d'arc, la surface incurvée en forme d'arc fait face à la source lumineuse de forme annulaire (3), la source lumineuse de forme annulaire (3) inclut une pluralité de sous-sources lumineuses de forme annulaire (4, 5, 6) agencées en séquence le long d'une direction d'une position proche de la pièce (7) à une position éloignée de la pièce (7) et la pluralité de sous-sources lumineuses de forme annulaire (4, 5, 6) émettent de la lumière de différentes couleurs ;
une étape de traitement d'image consistant à réaliser un traitement d'image sur l'image capturée de façon à obtenir une pluralité de régions d'image ($I_1$, $I_2$, $I_3$), dans lequel la pluralité de régions d'image ($I_1$, $I_2$, $I_3$) présente des couleurs différentes, et les couleurs de la pluralité de régions d'image ($I_1$, $I_2$, $I_3$) correspondent aux couleurs de la lumière émise depuis la pluralité de sous-sources lumineuses de forme annulaire (4, 5, 6) ; et
une étape d'entrée consistant à obtenir des paramètres caractéristiques d'une image de la pluralité de régions d'image ($I_1$, $I_2$, $I_3$) et à entrer les paramètres caractéristiques de l'image de la pluralité de régions d'image ($I_1$, $I_2$, $I_3$) dans un modèle prédéterminé d'inspection de qualité d'une pièce de façon à acquérir un résultat d'inspection de qualité de la pièce (7),
dans lequel chacune des sous-sources lumineuses de forme annulaire (4, 5, 6) comprend une pluralité de diodes électroluminescentes agencées en une pluralité de réseaux de forme annulaire, dans lequel un rayon de chacun des réseaux de forme annulaire augmente le long de la direction allant d'une position éloignée de la pièce à une position proche de la pièce,
et dans lequel la source lumineuse de forme annulaire (3) inclut :

une première sous-source lumineuse de forme annulaire (4) émettant une lumière rouge ;
une deuxième sous-source lumineuse de forme annulaire (5) émettant une lumière verte ; et
une troisième sous-source lumineuse de forme annulaire (6) émettant une lumière bleue,
et dans lequel les paramètres caractéristiques d'image de la pluralité des régions d'image ($I_1$, $I_2$, $I_3$) incluent :

une distance (D) entre un centre de gravité effectif et un centre de gravité théorique de la pièce (7), déterminée sur la base de la pluralité de régions d'image ($I_1$, $I_2$, $I_3$);
une superficie (A) occupée par la pièce (7) dans l'image capturée, déterminée sur la base de la pluralité de régions d'image ($I_1$, $I_2$, $I_3$);
une distance (d) entre des centres de gravité de deux régions d'image ($I_1$, $I_2$, $I_3$) quelconques parmi la pluralité des régions d'image ($I_1$, $I_2$, $I_3$) ; et
un rapport de superficies (Ra) de deux régions d'image ($I_1$, $I_2$, $I_3$) quelconques parmi la pluralité de régions d'image ($I_1$, $I_2$, $I_3$).

2. Procédé d'inspection de pièce selon la revendication 1, dans lequel l'étape de traitement d'image inclut :

la division de l'image capturée en trois images de canaux rouge, verte et bleue ; et
la combinaison des trois images de canaux en utilisant une fonction linéaire ou non-linéaire de façon à atteindre trois régions d'image ($I_1$, $I_2$, $I_3$).

3. Procédé d'inspection de pièce selon la revendication 2, dans lequel les trois régions d'image ($I_1$, $I_2$, $I_3$) sont obtenues en utilisant des équations $I1 = I_1 = f_1(I_R, I_G, I_B)$, $I1 = I_2 = f_2(I_R, I_G, I_B)$, et $I1 = I_3 = f_3(I_R, I_G, I_B)$ pour combiner les trois images de canaux ; ici, $I_1$ est une première région d'image, $I_2$ est une deuxième région d'image, $I_3$ est une troisième région d'image, $I_R$ est une image de canal rouge, $I_G$ est une image de canal verte, $I_B$ est une image de canal bleue, et chacun de $f_1$, $f_2$, et $f_3$ représente une fonction linéaire ou non-linéaire.

4. Procédé d'inspection de pièce selon l'une quelconque des revendications précédentes, dans lequel les paramètres caractéristiques d'image de la pluralité des régions d'image ($I_1$, $I_2$, $I_3$) incluent en outre au moins un parmi :

une rondeur (Ro) de chacune de la pluralité de régions d'image ($I_1$, $I_2$, $I_3$) ; et
un degré de remplissage (P) de chacune des images binaires de la pluralité de régions d'image ($I_1$, $I_2$, $I_3$).

**5.** Procédé d'inspection de pièce selon l'une quelconque des revendications 1 à 4, comprenant en outre :

une étape d'obtention consistant à obtenir le modèle prédéterminé d'inspection de qualité de pièce,
dans lequel,
l'étape d'obtention inclut
l'établissement d'un modèle d'inspection de qualité de pièce initial contenant des paramètres de poids correspondant aux paramètres caractéristiques d'image ;
l'acquisition de données de formation contenant des résultats d'inspection de qualité de pièces échantillons (7) et des paramètres caractéristiques d'image d'une pluralité de régions d'image $(I_1, I_2, I_3)$ de chacune des pièces échantillons (7), dans lequel la pluralité de régions d'image $(I_1, I_2, I_3)$ de chacune des pièces échantillons (7) sont atteintes en réalisant un traitement d'image sur une image capturée en utilisant la source lumineuse de forme annulaire (3) pour éclairer la même pièce échantillon (7) ; et
l'utilisation des données de formation pour former le modèle d'inspection de qualité de pièce initial de façon à obtenir le modèle prédéterminé d'inspection de qualité de pièce.

**6.** Appareil d'inspection de pièce (20) comprenant :

une partie de capture (21) configurée pour utiliser une source lumineuse de forme annulaire pour éclairer une pièce à inspecter de façon à capturer une image de la pièce, dans lequel la pièce présente une surface incurvée en forme d'arc, la surface incurvée en forme d'arc fait face à la source lumineuse de forme annulaire, la source lumineuse de forme annulaire inclut une pluralité de sous-sources lumineuses de forme annulaire agencées en séquence le long d'une direction allant d'une position proche de la pièce à une position éloignée de la pièce, et la pluralité de sous-sources lumineuses de forme annulaire émettent de la lumière de couleurs différentes ;
une partie de traitement d'image (22) configurée pour réaliser un traitement d'image sur l'image capturée de façon à obtenir une pluralité de régions d'image $(I_1, I_2, I_3)$, dans lequel la pluralité de régions d'image $(I_1, I_2, I_3)$ présente différentes couleurs, et les couleurs de la pluralité de régions d'image $(I_1, I_2, I_3)$ correspondent aux couleurs de la lumière émise par la pluralité de sous-sources lumineuses de forme annulaire ; et
une partie d'entrée (23) configurée pour obtenir des paramètres caractéristiques d'image de la pluralité de régions d'image $(I_1, I_2, I_3)$ et entrer

les paramètres caractéristiques d'image de la pluralité de régions d'image $(I_1, I_2, I_3)$ dans un modèle prédéterminé d'inspection de qualité de pièce de façon à acquérir un résultat d'inspection de qualité de la pièce,
dans lequel chacune des sous-sources lumineuses de forme annulaire (4, 5, 6) comprend une pluralité de diodes électroluminescentes agencées en une pluralité de réseaux de forme annulaire, dans lequel un rayon de chacun des réseaux de forme annulaire augmente le long de la direction allant d'une position éloignée de la pièce à une position proche de la pièce,
et dans lequel la source lumineuse de forme annulaire (3) comprend :

une première sous-source lumineuse de forme annulaire (4) émettant une lumière rouge ;
une deuxième sous-source lumineuse de forme annulaire (5) émettant une lumière verte ; et
une troisième sous-source lumineuse de forme annulaire (6) émettant une lumière bleue ;
et dans lequel les paramètres caractéristiques d'image de la pluralité des régions d'image $(I_1, I_2, I_3)$ incluent :

une distance (D) entre un centre de gravité effectif et un centre de gravité théorique de la pièce (7), déterminée sur la base de la pluralité de régions d'image $(I_1, I_2, I_3)$ ;
une superficie (A) occupée par la pièce (7) dans l'image capturée, déterminée sur la base de la pluralité de régions d'image $(I_1, I_2, I_3)$ ;
une distance (d) entre des centres de gravité de deux régions d'image $(I_1, I_2, I_3)$ quelconques parmi la pluralité des régions d'image $(I_1, I_2, I_3)$ ; et
un rapport de superficies (Ra) de deux régions d'image $(I_1, I_2, I_3)$ quelconques parmi la pluralité de régions d'image $(I_1, I_2, I_3)$.

**7.** Appareil d'inspection de pièce selon la revendication 6, comprenant en outre :

une partie d'obtention (24) configurée pour obtenir le modèle prédéterminé d'inspection de qualité d'une pièce,
dans lequel,
la partie d'obtention (24) inclut
une sous-partie d'établissement de modèle (241) configurée pour établir un modèle initial d'inspection de qualité d'une pièce contenant des paramètres de poids correspondant aux paramètres caractéristiques d'image ;

une sous-partie d'acquisition (242) configurée pour acquérir des données de formation contenant des résultats d'inspection de qualité de pièces échantillons et des paramètres caractéristiques d'image d'une pluralité de régions d'image ($I_1$, $I_2$, $I_3$) de chacune des pièces échantillons, dans lequel la pluralité de régions d'image ($I_1$, $I_2$, $I_3$) de chacune des pièces échantillons sont obtenues en réalisant un traitement d'image sur une image capturée à l'aide de la source lumineuse de forme annulaire pour éclairer la même pièce échantillon ; et

une sous-partie de formation (243) configurée pour utiliser les données de formation permettant de former le modèle initial d'inspection de qualité d'une pièce, de façon à obtenir le modèle prédéterminé d'inspection de qualité d'une pièce.

# FIG.1

START

↓

S101

USE RING-SHAPED LIGHT SOURCE TO ILLUMINATE WORKPIECE TO BE INSPECTED SO AS TO CAPTURE IMAGE OF WORKPIECE, WORKPIECE HAVING ARC-SHAPED CURVED SURFACE FACING RING-SHAPED LIGHT SOURCE, RING-SHAPED LIGHT SOURCE CONTAINING RING-SHAPED SUB-LIGHT SOURCES ARRANGED IN SEQUENCE ALONG DIRECTION FROM BEING CLOSE TO WORKPIECE TO BEING AWAY FROM WORKPIECE, RING-SHAPED SUB-LIGHT SOURCES EMITTING LIGHT OF DIFFERENT COLORS

↓

S102

PERFORM IMAGE PROCESSING ON CAPTURED IMAGE SO AS TO OBTAIN IMAGE REGIONS, IMAGE REGIONS HAVING DIFFERENT COLORS CORRESPONDING TO COLORS OF LIGHT EMITTED FROM RING-SHAPED SUB-LIGHT SOURCES

↓

S103

INPUT IMAGE FEATURE PARAMETERS OF IMAGE REGIONS INTO PREDETERMINED WORKPIECE QUALITY INSPECTION MODEL SO AS TO ACQUIRE QUALITY INSPECTION RESULT OF WORKPIECE

↓

END

# FIG.2

# FIG.3

# FIG.4A

# FIG.4B

# FIG.4C

# FIG.5

# FIG.6

EP 3 855 176 B1

# FIG.7

EP 3 855 176 B1

# FIG.8

MODEL ESTABLISHMENT SUBPART 241 — ACQUISITION SUBPART 242 — TRAINING SUBPART 243

EP 3 855 176 B1

# FIG.9

EP 3 855 176 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5751910 A

**Non-patent literature cited in the description**

- A tiered-color illumination approach for machine inspection of solder joints. **CAPSON D W et al.** IEEE TRANSACTIONS ON PATTERN ANALYSIS AND MACHINE INTELLIGENCE. IEEE COMPUTER SOCIETY, 01 May 1988, vol. 10, 387-393

- An AOI algorithm for PCB based on feature extraction. **FUPEI WU et al.** INTELLIGENT CONTROL AND AUTOMATION. IEEE, 25 June 2008, 240-247